# EUROPEAN PATENT SPECIFICATION

(11) **EP 1 490 642 B1**
(45) Date of publication and mention of the grant of the patent: **27.10.2010**
(21) Application number: 03716934.9
(22) Date of filing: 01.04.2003
(51) Int. Cl.: F28D 20/02, C09K 5/06

(54) **WALL LINING**
WANDVERKLEIDUNG
REVETEMENT MURAL

(30) Priority: 02.04.2002 GB 0207642
(43) Date of publication of application: 29.12.2004
(73) Proprietor: Omnova Wallcovering (UK) Limited, Hertfordshire RP2 4RF (GB); OMNOVA SOLUTIONS INC., Fairlawn, Ohio 44333-3300 (US)
(72) Inventor: Marshall, Allan, Hawkhurst, Kent TN18 5EF (GB); Corner, Terence, Sevenoaks, Kent TN13 2NN (GB)
(74) Representative: Slingsby, Philip Roy
(86) International application number: PCT/US2003/009902
(87) International publication number: WO 2003/085346

(56) References cited:
- EP-A- 0 003 442
- WO-A-98/42929
- US-A- 4 259 401
- US-A- 4 367 788
- US-A- 4 587 279
- US-A- 4 747 240
- US-A- 5 501 268

## Description

### BACKGROUND INFORMATION

This invention relates to wall linings, especially wall linings that provide enhanced thermal efficiency.

Building walls typically comprise a rigid walling material such as brick or plasterboard covered with a wall lining such as, for example, paint and/or a sheet material like wall paper or a wallcovering.

There is a general desire for buildings to be energy efficient so as to reduce the costs of heating and cooling them. In the case of building walls this is normally addressed by incorporating insulating materials such as rigid foam or heat-reflective metallic sheet into the rigid element of the wall.

Materials commonly known as phase change materials have been used in textiles (for instance for military clothing), surgical bandages and protectors for electronic components. These materials exhibit a phase change at an operational or working temperature, in the course of which they absorb or emit heat. This gives them thermal regulating properties.

It has also been proposed to incorporate phase change materials into plasterboard sheet which could then be used for the rigid elements of walls. Wall boards incorporating phase-change materials have been proposed, for example, in CBS Newsletter, Fall 1997 currently available from http://eetd.lbl.gov/newsletter/CBS_NL/nl16/phase.html and ASHRAE Transactions: Research, vol. 99, part 2, paper #3724. These are rigid boards formed of gypsum into which phase change materials have been incorporated with the intention of enhancing the thermal energy storage capacity of buildings whose walls are formed of the boards.

Although gypsum wallboard (due to its highly porous nature) was found to make an ideal supporting medium for phase change materials, the systems that have been developed suffer from a number of problems. The preferred forms of phase change materials in such wall boards have been paraffins and fatty acids. Wall boards incorporating paraffins present flammability issues, and wall boards incorporating fatty acids (which are generally derived from meat byproducts and vegetables) have been found to give off unacceptable odor levels.

Additionally, while it might be convenient to use such wall boards when constructing a new building, incorporating them into an existing room would mean replacing the existing walling of the room, which would be inconvenient, messy, and potentially so costly as to outweigh any expected energy savings.

EP0003442 describes a building panel, such as a wall or ceiling tile, which is capable of absorbing heat at normal room temperatures and radiating the absorbed heat on cooling. The panel has an outer casing made of cured resin with at least one thin planar cavity containing phase change material.

WO98/42929 describes a technique for minimizing the floor-to-ceiling temperature gradient of a room. It utilizes phase change material in a floor covering and a ceiling covering and discusses the melting and crystallization temperatures for each of the coverings.

### DESCRIPTION OF THE INVENTION

Briefly, there is provided a flexible wall lining that includes one or more phase change materials exhibiting a phase change at a temperature in the range from 5° to 40°C, wherein said at least one phase change material is in the form of particles and said particles are embedded in a polymer layer. The wall lining preferably is in the form of a sheet which preferably has an adhesive layer for adhering it to a wall. Alternatively the sheet could be pasted to a wall using an additional adhesive. The adhesive layer may initially be provided with a removable backing sheet on its face opposite the body of the sheet.

The mechanism of the or each phase change is preferably endothermic with increasing temperature and exothermic with reducing temperature. At atmospheric pressure, the or each phase change material preferably has a first phase stable at a temperature below the respective phase change temperature and a second phase stable above the respective phase change temperature. The change from the first to the second phase is preferably endothermic, and the change from the second to the first phase preferably exothermic. Thus the phase change material may act as a temperature buffer about the respective phase change temperature.

The size of the particles is preferably in the range from 10 to 120 µm, or up to 300µm. Preferably each particle is encapsulated with an impermeable coating,

This coating may be constituted by a structural material of a layer of the coating, or each particle may be individually encapsulated. The coating is preferably flexible.

Alternatively the particles are adhered to an absorbent layer of the wall lining, for example by impregnating a paper or textile layer of the wall lining with the particles.

There is also provided a use of a flexible wall lining as a lining applied to a wall, the flexible wall lining comprising at least one phase change material, each of said at least one phase change material exhibiting a phase change at a temperature in the range from 5° to 40°C, wherein said at least one phase change material is in the form of particles and said particles are embedded in a polymer layer.

Optional features of a use of a flexible wall lining are defined in claims 14 to 24.

Preferably the wall lining comprises from 30 to 60% by weight or alternatively by volume of the phase change material(s). Amounts outside that range could also be used.

Conveniently the or at least one of the phase change materials is hydrated below the temperature at which it exhibits the phase change, and conveniently less hydrated above that temperature. At least one of the phase change materials may be a hydrated metal salt. Phase change materials employing other mechanisms could also be used.

If wall lining comprises two phase change materials, the temperatures at which they exhibit the said phase change may suitably differ by at least 1°C. This can help to broaden the effective buffering range of the wall lining.

The wall lining could be intended to form an exposed surface of a wall to which it is applied. In that case the wall lining could be provided with a cosmetic outer face, for example a printed outer face. Alternatively, the wall lining could be affixed to a wall and then decorated, for instance by painting or by applying a sheet material such as wall paper.

In the accompanying drawings:
Fig. 1 is a cross-section of one form of wall coating;
Fig. 2 is a cross-section of a wall to which the coating of Fig. 1 has been applied; and
Fig. 3 is a cross-section of another form of wall coating; and
The present invention now is described by way of example with reference to the drawings with like reference numerals designating like parts.

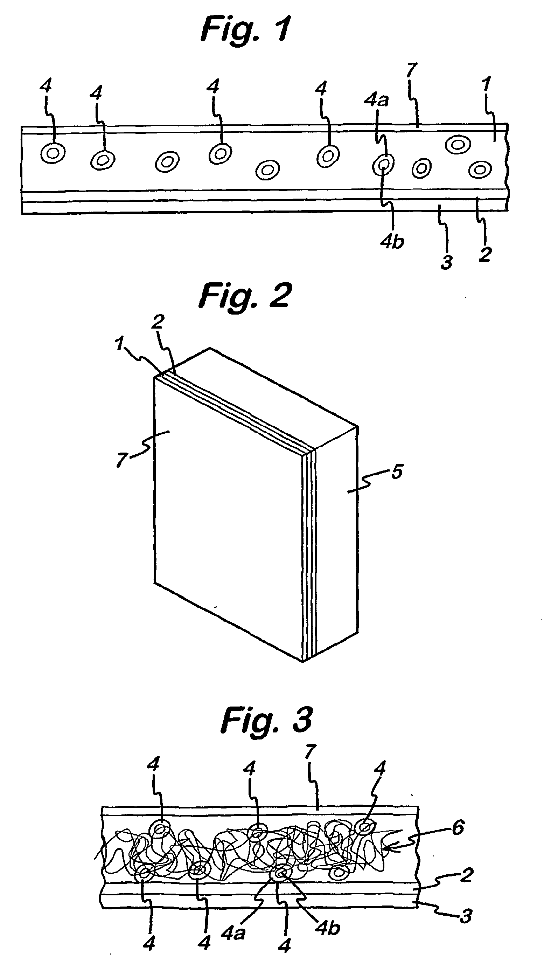

Figure 1 shows a cross-section of one form of wall coating. The wall coating of Fig. 1 is a flexible sheet having a structural or body layer 1 and an adhesive layer 2 attached to the body layer and covering one major surface of the body layer. The adhesive layer is backed by a removable backing sheet 3, which protects the adhesive layer until the coating is to be applied to a wall. The body layer 1 comprises at least one phase change material, which in this instance is provided in the form of particles 4 which are embedded in the body layer 1. The phase change material exhibits an exothermic/endothermic phase change at a working temperature. As is conventional with such so-called phase change materials, the material is such that in passing through the phase change from below the working temperature to above the working temperature the material absorbs heat (endothermic) and vice versa. When the wall coating is applied to the wall 5 of a building (see Fig. 2) it can assist in stabilising the temperature of the building around the working temperature, and thus enhance the building's energy efficiency.

The wall coating will now be described in more detail.

The phase change material is preferably present in the wall lining in the form of particles. Figure 1 illustrates one way in which the particles may be integrated with the wall lining. In the wall lining of Fig. 1 the particles 4 are embedded in a polymer material that forms the matrix of the body layer 1. Fig. 2 illustrates another way in which the particles may be integrated with the wall lining. In the wall lining of Fig. 2, the particles have been coated on to an absorbent scrim 6 by soaking the scrim with a liquid bearing the particles, and then drying the scrim so as to leave the particles bound to the scrim. Another option would be to have the particles bound in the adhesive layer 2.

The phase change material could be incorporated in the wall lining in another way than as particles. For example, if the phase change material were in the form of a sheet then it could be laminated to the body layer 1 between the body layer and the adhesive layer 2. The phase change material could be attached to the body layer by an additional adhesive layer.

The phase change material could, for example be a hydrated metal salt such as hydrated aluminium chloride, hydrated magnesium chloride or Glauber's salt (sodium sulphate decahydrate). Alternative materials are listed in the following table.

| **Material** | **Approximate melting point (°C)** |
|---|---|
| CaCl₂·6 H₂O | 27 |
| Na₂SO₄ · 10 H₂O | 32 |
| MgCl₂ · 6 H₂O | 117 |
| Na₂S₂O₃ · 5 H₂O | 48 |
| polyethylene glycol (M_{w} > 2000) | 45 |
| C₁₆H₃₄ | 18 |
| C₁₇H₃₆ | 22 |
| C₁₈H₃₈ | 28 |
| C₁₉H₄₀ | 32 |
| C₂₀H₄₂ | 36 |

Another possible alternative is a PEG/celulose diacetate blend.

To achieve the desired thermal properties, two or more phase change materials could be used in combination.

The working temperature of the phase change material - that is the temperature at which its relevant phase change occurs - should suitably be in the range from 5° to 40°C. One preferred possibility is for the working temperature to be around a desired lower temperature for a building interior, so that it can release heat as the temperature falls to that level: for that purpose the working temperature is suitably in the range from 8° to 14°C. Another preferred possibility is for the working temperature to be around a desired upper temperature for a building interior, so that it can absorb heat as the temperature rises to that level: for that purpose the working temperature is suitably in the range from 26° to 32°C, preferably between 28° and 30°C. Another preferred possibility is for the working temperature to be around a desired ambient temperature for a building interior, so that it can moderate temperature changes in the building: for that purpose the working temperature is suitably in the range from 14° to 26°C. Broader-based effects may be achieved by using combinations of materials from one or more of these temperature ranges.

Many candidates for the phase change materials are hydrated materials, especially hydrated metal salts. In order to maintain such materials in a suitably hydrated state over the lifetime of the wall lining and also during manufacture of the wall lining it is preferred that they are encapsulated in an impermeable coating. This is illustrated in figures 1 and 3, in which the particles 4 comprise a core 4b of phase change material and an impermeable outer coating 4a. The outer coating 4a seals the core 4b so that the composition of the core does not change during use. The encapsulation should be performed below the phase change material's phase change temperature since in that range its degree of hydration will be stable. The encapsulant will typically be a hydrophobic material, and it may be difficult to fully encapsulate hydrated materials with such a material. One way in which this may be achieved is by means of the micro-encapsulation technique described in US 4,675,140. That techniques involves the direction of a suspension of the particles and the encapsulant on to a rotating surface. The surface centrifuges the particles surrounded by the encapsulant into air, which causes the encapsulant to cure around the particles.

Where the particles are loaded into a polymer matrix as in the coating of figure 1, the matrix itself may provide sufficient encapsulation of the particles to keep them stable during use. However, even in that embodiment it is preferred that the particles are individually encapsulated since that diminishes the possibility that the particles will deteriorate when they are loaded into the matrix during manufacture of the wall coating.

To accommodate any volume change accompanying the phase change, any encapsulant and/or matrix holding the phase change material should preferably be flexible.

The phase change material and any encapsulant should be selected to have suitable properties for safe use as a building material. For example, it should preferably be non-flammable and/or non-hazardous.

Where the phase change materials are in the form of particles, it is preferred that the particles are in the size range from 10 to 120 µm. Larger or smaller particles could also be used. Relatively small particles are preferred as they are likely to interfere less with the handling, for example cutting, of the wall lining. The loading of the particles into the wall lining is preferably in the range from 30 to 60% by weight or alternatively by volume. To assist in achieving a relatively high loading of the particles, particles of different sizes may be used. One preferred arrangement is for the matrix to include particles of two or more sets of sizes, each differing from the others in size by at least an order of magnitude. In this arrangement the particles of smaller sizes can occupy a considerable proportion of the volume between the larger particles. For example, there may be two sets of particles: one having a particle size of approximately 100 µm and one having a particle size of approximately 10 µm. The sizes of particles in each set are preferably tightly controlled to facilitate easy manufacture and to optimise filling. The particles of the largest size set preferably occupy 30 to 60% of the volume of the layer of the wall lining in which they are contained. The particles of the next smallest size preferably occupy up to 60%, and preferably 30 to 60% of the remaining volume, and so on.

The matrix of the body layer 1 is preferably a polymer material, such as a vinyl resin. The scrim 6 could be of paper or fabric.

The wall lining is preferably in the form of a flexible sheet, that can be applied to a wall in a similar way to conventional wall papers and vinyl wall linings. The finished sheet could be put in the form of a roll for shipping and storage, and unrolled for application to a wall. The outer surface of the sheet (e.g., the major surface of the body layer 1 to which the adhesive 2 is not applied, in the embodiment of Fig. 1) could have a decorative aspect. The outer surface could be pigmented by the application of a pigmented layer 7 to the surface, or the incorporation of pigment into the another layer of the sheet (e.g., layer 1). The outer surface could be embossed with a surface relief pattern. Alternatively, it could be intended that the wall lining should be decorated after having been installed. In that case it could have a plain exterior surface.

In summary, the wall linings of Figs. 1 and 3 are multilayer structures. Each embodiment comprises a layer (1,6) that forms the body of the wall lining. Phase change materials are incorporated in that layer: in one instance by being embedded in it and in the other instance by being adhered to its surface. Although it is not essential that an adhesive layer is provided, it is preferred that the wall lining comprises an adhesive layer 2 which coats one major surface of the body layer 1,6. The adhesive layer may be provided with a releasable backing layer 3 over its other major surface. One major surface of the body layer 1,6 may be provided with a decorative coating 7. If the wall lining has an adhesive layer 2, that surface is preferably the surface of the body layer to which the adhesive is not affixed.

The wall lining could include other materials intended to enhance energy efficiency by other mechanisms. For example, it could include reflective materials such as metallic fragments or metallic sheet for heat reflection.

The adhesive layer could be omitted from the coating. The coating could be fixed to a wall by an additional adhesive applied at the time of fixing, or by another means such as tacks.

Although the coating is suitable for application to walls, in practice it could be applied to other elements such as floors or ceilings.

### EXAMPLES

### Example 1

In a plastic beaker, 118 g Reofos™ 50 flame retardant (Great Lakes Chemical Corp.; Indianapolis, Indiana) was mixed with 1 g Lankromark™ LZB320 PVC stabilizer (Akcros Chemicals Ltd.; Manchester, England) in a using a laboratory mixer. To this mixture was slowly added 50 g Evipol™ MP6852 micro-suspension PVC (EVC (UK) Ltd.; Cheshire, England); after thorough mixing, another 50 g Evipol™ MP6852 PVC was added. After thorough mixing, to the resulting low viscosity liquid was slowly added two 38 g portions (each followed by mixing) of Micronal™ DS 5001 X powdered phase change material so as to give a viscous but pourable liquid.

This liquid was poured onto an A3 sheet of 80 g/m³ paper and the paper passed through a knife coater with a gap of 2 mm so as to give a thick coating. Immediately after coating the coated paper was put into an oven set at 160°C for 3 minutes. The resultant coating had a coating weight of 1,766 g/m³.

Using DSC with a heating/cooling rate of 10°C/min, the coating was found to have a melting point and a freezing point very similar to those shown by the powdered phase change material. The cured, flexible coating contained approximately 25.8% (w/w) microencapsulated wax with a melting point of ∼23°C and a freezing point of ∼13°C.

### Example 2

In a plastic beaker, 90 g dioctyl phthalate plasticizer (Hoechst AG; , was mixed with 1 g Lankromark™ LZB320 stabilizer, 3 g Lankroflex™ E2307 epoxidized soya bean oil (Akcros Chemicals), and 2 g Deplastol™ fatty acid polyglycol ester (Cognis Performance Chemicals) using a laboratory mixer. To this mixture was slowly added 50 g Evipol™ MP6852 PVC and, after thorough mixing, 9.32 g Sb₂O₃ and an additional 50 g Evipol™ MP6852 PVC. After thorough mixing, to the resulting low viscosity liquid was slowly added two 40 g portions (each followed by mixing) of Rubitherm™ PX27 silica powder containing a phase change wax (Rubitherm GmbH; Hamburg, Germany) so as to give a viscous but pourable liquid.

This liquid was then poured onto an A3 sheet of 60 g/m³ non-woven fabric and the coated fabric passed through a knife coater with a gap of 0.5 mm so as to give a thick coating. Immediately thereafter, the coated fabric was put into a oven set at 160°C for 3 minutes. The resultant coating had a coating weight of 450 g/m³. DSC analysis showed that the coating had a melting point and a freezing point similar to those shown by the phase change material. The cured, flexible coating contained approximately 28.0% (w/w) phase change materials with a melting point of ∼9°C and a freezing point of ∼0°C.

### Example 3

Using the procedure of Example 1, 127 g Reofos™ 50 flame retardant was mixed with 1 g Lankromark™ LZB320 stabilizer. To this mixture was slowly added two 50 g charges of Evipol™ MP6852 PVC. When this had been mixed in thoroughly, a further 50 g of Evipol MP6852 was added. After thorough mixing yielded a low viscosity liquid, two separate portions of 38 g Rubitherm™ PX27 silica powder containing a phase change wax were slowly added, the second of which was accompanied by 9 g Reofos™ 50 flame retardant, and the composition thoroughly mixed so as to give a viscous but pourable liquid.

This liquid was then poured, coated, and heated as described in Examples 1 and 2 (coater gap of 1.5 mm); the resultant coating had a coating weight of 1,300 g/m³. DSC analysis showed that the coating had a melting point and a freezing point similar to those shown by the phase change material. The cured, flexible coating contained approximately 25.0% (w/w) of the phase change material with a melting point of ∼13°C and a freezing point of ∼1°C.

### Example 4

Similar to the procedure of Example 2, 71 g dioctyl phthalate plasticizer was mixed with 1 g Lankromark™ LZB320 PVC stabiliser, 3 g Lankroflex™ E2307 epoxidised soya bean oil, 2 g Deplastol™ fatty acid polyglycol ester, and 19 g Cereclor™ S45 chlorinated paraffin (IACC; Thailand). To this mixture was slowly added (separated by thorough mixing) two 50 g charges of Evipol™ MP6852 PVC and 12 g SBP11 solvent (Gelpe and Bate Ltd.) to give a low viscosity liquid. To this was slowly added two charges (each followed by thorough mixing) of 68 g Rubitherm™ GR30 granular diatomaceous earth containing a phase change wax (Rubitherm GmbH) to give a viscous but pourable liquid.

This liquid was then poured, coated, and heated as described previously (80 g/m³ paper, coater gap of 2.0 mm, 8 minutes of heating); the resultant coating had a coating weight of 2100 g/m³. DSC analysis showed that the coating had a melting point and a freezing point similar to those of the phase change material. The cured, flexible coating contained approximately 30.1% (w/w) of the phase change material with a melting point of ∼6°C and a freezing point of - -3°C.

### Example 5

Similarly to that described in the prior examples, 64 g Reofos™ 50 flame retardant, 1 g Lankromark™ LZB320 stabiliser, 3 g Lankroflex™ E2307 epoxidized soya bean oil, 2 g Deplastol™ fatty acid polyglycol ester, and 33 g Cereclor™ S45 chlorinated paraffin were mixed. To this mixture was slowly added two 50 g charges of Evipol™ MP6852 PVC, which charges were separated by the addition of 9.32 g Sb₂O₃, 18 g Thermasorb™ 83 microencapsulated wax (Frisby Technologies Inc.; Winston Salem, North Carolina) and 12 g SBP11 solvent. This gave a low viscosity liquid to which was slowly added an additional 46 g Thermasorb™ 83 wax. Mixing was continued so as to give a viscous but pourable liquid.

This liquid was then poured, coated, and heated as described previously (80 g/m³ paper, coater gap of 2.0 mm, 3 minutes of heating); the resultant coating had a coating weight of 1900 g/m³. DSC analysis showed that the coating had a melting point and a freezing point similar to those of the phase change material. The cured, flexible coating contained approximately 26.36% (w/w) of phase change material with a melting point of ∼17°C and a freezing point of ∼1°C.

### Example 6

Together were mixed 71 g dioctyl phthalate plasticizer, 1 g Lankromark™ LZB320 stabilizer, 3 g Lankroflex™ E2307 epoxidized soya bean oil, 2 g Deplastol fatty acid polyglycol ester, and 33 g Cereclor™ S45 chlorinated paraffin. To this mixture was slowly added two 50 g charges of Evipol™ MP6852 PVC separated by thorough mixing and the addition of 9.32 g Sb₂O₃. To the resulting low viscosity liquid, 76 g Thermasorb™ 83 microencapsulated wax was slowly added and mixing was continued so as to give a viscous but pourable liquid.

This liquid was then poured, coated, and heated as described previously (80 g/m³ paper, coater gap of 2.0 mm, 3 minutes of heating); the resultant coating had a coating weight of 1715 g/m³. DSC analysis showed that the coating had a melting point and a freezing point similar to those of the phase change material. The cured, flexible coating contained approximately 27.02% (w/w) of phase change material with a melting point of ∼21 or and a freezing point of ∼11°C.

## Claims

1. A flexible wall lining comprising at least one phase change material, each of said at least one phase change material exhibiting a phase change at a temperature in the range from 5° to 40°C, wherein said at least one phase change material is in the form of particles (4) and said particles are embedded in a polymer layer (1).

2. The wall lining of claim 1 wherein the wall lining is in the form of a sheet, said sheet optionally comprising on one primary side thereof an adhesive layer (2) for securing said sheet to a wall (5).

3. The wall lining of any of claims 1 and 2 wherein the phase change is endothermic with increasing temperature and exothermic with decreasing temperature.

4. The wall lining of any preceding claim wherein said particles have diameters of from 10 to 120 µm.

5. The wall lining of any of claims 1 to 3 wherein said particles have two or more sets of sizes, wherein each size differs by at least an order of magnitude .

6. The wall lining of claim 5 wherein said particles have sizes of approximately 10 µm and approximately 100 µm.

7. The wall lining of any preceding claim wherein each of said particles is encapsulated with an impermeable coating (4a), said coating optionally being flexible.

8. The wall lining of any preceding claim wherein said particles are at least one of embedded in a layer of the wall lining and adhered to an absorbent layer (6) of the wall lining.

9. The wall lining of any preceding claim wherein the wall lining comprises from 30 to 60% by volume of said at least one phase change material.

10. The wall lining of any preceding claim wherein said at least one phase change materials is hydrated below the temperature at which it exhibits the phase change.

11. The wall lining of any preceding claim wherein said at least one phase change materials is a blend of at least two such materials, the temperatures at which each exhibits a phase change differing by at least 1°C.

12. The wall lining of any preceding claim wherein the wall lining can be put in the form of a roll and unrolled for application to a wall.

13. The use of a flexible wall lining as a lining applied to a wall, the flexible wall lining comprising at least one phase change material, each of said at least one phase change material exhibiting a phase change at a temperature in the range from 5° to 40°C, wherein said at least one phase change material is in the form of particles and said particles are embedded in a polymer layer.

14. The use of a wall lining of claim 13 wherein the wall lining is in the form of a sheet, said sheet optionally comprising on one primary side thereof an adhesive layer for securing said sheet to a wall.

15. The use of a wall lining of any of claims 13 and 14 wherein the phase change is endothermic with increasing temperature and exothermic with decreasing temperature.

16. The use of a wall lining of any of claims 13 to 15 wherein said particles have diameters of from 10 to 120 µm.

17. The use of a wall lining of any of claims 13 to 15 wherein said particles have two or more sets of sizes wherein each size differs by at least an order of magnitude .

18. The use of a wall lining of claim 17 wherein said particles have sizes of approximately 10 µm and approximately 100 µm.

19. The use of a wall lining of any of claims 13 to 18 wherein each of said particles is encapsulated with an impermeable coating, said coating optionally being flexible.

20. The use of a wall lining of any of claims 13 to 19 wherein said particles are at least one of embedded in a layer of the wall lining and adhered to an absorbent layer (6) of the wall lining.

21. The use of a wall lining of any of claims 13 to 20 wherein the wall lining comprises from 30 to 60% by volume of said at least one phase change material.

22. The use of a wall lining of any of claims 13 to 21 wherein said at least one phase change materials is hydrated below the temperature at which it exhibits the phase change.

23. The use of a wall lining of any of claims 13 to 22 wherein said at least one phase change materials is a blend of at least two such materials, the temperatures at which each exhibits a phase change differing by at least 1°C.

24. The use of a wall lining of any of claims 13 to 23 wherein the wall lining can be put in the form of a roll and unrolled for application to the wall.

## Patentansprüche

1. Flexible Wandverkleidung, die zumindest ein Phasenübergangsmaterial aufweist, wobei jedes von dem zumindest einen Phasenübergangsmaterial einen Phasenübergang bei einer Temperatur in dem Bereich von 5° bis 40°C aufweist, wobei das zumindest eine Phasenübergangsmaterial in der Form von Partikeln (4) vorliegt und diese Partikel in einer Polymerschicht (1) eingebettet sind.

2. Wandverkleidung nach Anspruch 1, wobei die Wandverkleidung die Form einer Folie aufweist, wobei die Folie auf einer tragenden Seite davon optional eine Haftmittelschicht (2) zum Befestigen der Folie an einer Wand (5) aufweist.

3. Wandverkleidung nach einem der Ansprüche 1 und 2, wobei der Phasenübergang bei zunehmender Temperatur endotherm ist und bei abnehmender Temperatur exotherm ist.

4. Wandverkleidung nach einem der vorherigen Ansprüche, wobei die Partikel Durchmesser von 10 bis 120 µm aufweisen.

5. Wandverkleidung nach einem der Ansprüche 1 bis 3, wobei die Partikel zwei oder mehr Gruppen von Größen aufweisen, wobei sich jede Größe zumindest um eine Größenordnung unterscheidet.

6. Wandverkleidung nach Anspruch 5, wobei die Partikel Größen von etwa 10 µm und etwa 100 µm aufweisen.

7. Wandverkleidung nach einem der vorherigen Ansprüche, wobei jeder der Partikel mit einer undurchlässigen Beschichtung (4a) verkapselt ist, wobei die Beschichtung optional flexibel ist.

8. Wandverkleidung nach einem der vorherigen Ansprüche, wobei die Partikel zumindest in einer Schicht der Wandverkleidung eingebettet und/oder an eine absorbierende Schicht (6) der Wandverkleidung geklebt sind.

9. Wandverkleidung nach einem der vorherigen Ansprüche, wobei die Wandverkleidung von 30 bis 60% an Volumen des zumindest einen Phasenübergangsmaterials aufweist.

10. Wandverkleidung nach einem der vorherigen Ansprüche, wobei das zumindest eine Phasenübergangsmaterial unterhalb der Temperatur hydratisiert ist, bei der es den Phasenübergang aufweist.

11. Wandverkleidung nach einem der vorherigen Ansprüche, wobei das zumindest eine Phasenübergangsmaterial eine Mischung aus zumindest zwei derartigen Materialien ist, wobei sich die Temperaturen bei denen jedes einen Phasenübergang aufweist um zumindest 1°C unterscheiden.

12. Wandverkleidung nach einem der vorherigen Ansprüche, wobei die Wandverkleidung in die Form einer Rolle gebracht werden kann und zum Aufbringen auf eine Wand entrollt werden kann.

13. Verwendung einer flexiblen Wandverkleidung als eine auf eine Wand aufgebrachte Verkleidung, wobei die flexible Wandverkleidung zumindest ein Phasenübergangsmaterial aufweist, wobei jedes von dem zumindest einen Phasenübergangsmaterial einen Phasenübergang bei einer Temperatur in dem Bereich von 5° bis 40°C aufweist, wobei das zumindest eine Phasenübergangsmaterial in der Form von Partikeln vorliegt und die Partikel in einer Polymerschicht eingebettet sind.

14. Verwendung einer Wandverkleidung nach Anspruch 13, wobei die Wandverkleidung in der Form einer Folie vorliegt, wobei die Folie optional auf einer tragenden Seite davon eine Haftmittelschicht zum Befestigen der Folie an einer Wand aufweist.

15. Verwendung einer Wandverkleidung nach einem der Ansprüche 13 und 14, wobei der Phasenübergang bei zunehmender Temperatur endotherm ist und bei abnehmender Temperatur exotherm ist.

16. Verwendung einer Wandverkleidung nach einem der Ansprüche 13 bis 15, wobei die Partikel Durchmesser von 10 bis 120 µm aufweisen.

17. Verwendung einer Wandverkleidung nach einem der Ansprüche 13 bis 15, wobei die Partikel zwei oder mehr Gruppen von Größen aufweisen, wobei sich jede Größe um zumindest eine Größenordnung unterscheidet.

18. Verwendung einer Wandverkleidung nach Anspruch 17, wobei die Partikel Größen von etwa 10 µm und etwa 100 µm aufweisen.

19. Verwendung einer Wandverkleidung nach einem der Ansprüche 13 bis 18, wobei jeder der Partikel mit einer undurchlässigen Beschichtung verkapselt ist, wobei die Beschichtung optional flexibel ist.

20. Verwendung einer Wandverkleidung nach einem der Ansprüche 13 bis 19, wobei die Partikel mindestens in eine Schicht der Wandverkleidung eingebettet und/oder an eine absorbierende Schicht (6) der Wandverkleidung geklebt sind.

21. Verwendung einer Wandverkleidung nach einem der Ansprüche 13 bis 20, wobei die Wandverkleidung von 30 bis 60% an Volumen des zumindest einen Phasenübergangsmaterials aufweist.

22. Verwendung einer Wandverkleidung nach einem der Ansprüche 13 bis 21, wobei das zumindest eine Phasenübergangsmaterial unterhalb der Temperatur hydratisiert ist, bei der es den Phasenübergang aufweist.

23. Verwendung einer Wandverkleidung nach einem der Ansprüche 13 bis 22, wobei das zumindest eine Phasenübergangsmaterial eine Mischung aus zumindest zwei derartigen Materialien ist, wobei sich die Temperaturen bei denen jedes einen Phasenübergang aufweist um zumindest 1°C unterscheiden.

24. Verwendung einer Wandverkleidung nach einem der Ansprüche 13 bis 23, wobei die Wandverkleidung in die Form einer Rolle gebracht werden kann und zum Aufbringen auf die Wand entrollt werden kann.

## Revendications

1. Revêtement flexible de mur comprenant un ou plusieurs matériaux à changement de phase, chacun desdits un ou plusieurs matériaux à changement de phase affichant un changement de phase à une température dans la gamme de 5 °C à 40 °C, où lesdits un ou plusieurs matériaux à changement de phase se présentent sous la forme de particules (4) et lesdites particules sont noyées dans une couche de polymère (1).

2. Revêtement de mur selon la revendication 1, dans lequel le revêtement de mur se présente sous la forme d'une feuille, ladite feuille comprenant facultativement sur l'un de ses côtés principaux, une couche adhésive (2) pour fixer ladite feuille à un mur (5).

3. Revêtement de mur selon l'une quelconque des revendications 1 et 2, dans lequel le changement de phase est endothermique avec une température croissante et exothermique avec une température décroissante.

4. Revêtement de mur selon l'une quelconque des revendications précédentes, dans lequel lesdites particules ont des diamètres de 10 à 120 µm.

5. Revêtement de mur selon l'une quelconque des revendications 1 à 3, dans lequel lesdites particules ont deux jeux de taille ou plus, où chaque taille diffère d'au moins un ordre de grandeur.

6. Revêtement de mur selon la revendication 5, dans lequel lesdites particules ont des tailles d'approximativement 10 µm et approximativement 100 µm.

7. Revêtement de mur selon l'une quelconque des revendications précédentes, dans lequel chacune desdites particules est encapsulée avec un revêtement imperméable (4a), ledit revêtement étant facultativement flexible.

8. Revêtement de mur selon l'une quelconque des revendications précédentes, dans lequel lesdites particules sont noyées dans une couche du revêtement de mur et/ou collées à une couche absorbante (6) du revêtement de mur.

9. Revêtement de mur selon l'une quelconque des revendications précédentes, dans lequel le revêtement de mur comprend de 30 à 60 % en volume dudit au moins un matériau à changement de phase.

10. Revêtement de mur selon l'une quelconque des revendications précédentes, dans lequel ledit au moins un matériau à changement de phase est hydraté en dessous de la température à laquelle il affiche le changement de phase.

11. Revêtement de mur selon l'une quelconque des revendications précédentes, dans lequel ledit au moins un matériau à changement de phase est un mélange d'au moins deux tels matériaux, les températures auxquelles chacun affiche un changement de phase différant d'au moins 1 °C.

12. Revêtement de mur selon l'une quelconque des revendications précédentes, dans lequel le revêtement de mur peut se présenter sous la forme d'un rouleau et être déroulé pour l'appliquer à un mur.

13. Utilisation d'un revêtement flexible de mur en tant que revêtement appliqué à un mur, le revêtement flexible de mur comprenant un ou plusieurs matériaux à changement de phase, chacun desdits un ou plusieurs matériaux à changement de phase affichant un changement de phase à une température dans la gamme de 5 °C à 40 °C, où lesdits un ou plusieurs matériaux à changement de phase se présentent sous la forme de particules sont noyées dans une couche de polymère.

14. Utilisation d'un revêtement de mur selon la revendication 13, dans laquelle le revêtement de mur se présente sous la forme d'une feuille, ladite feuille comprenant facultativement sur l'un de ses côtés principaux, une couche adhésive pour fixer ladite feuille à un mur.

15. Utilisation d'un revêtement de mur selon l'une quelconque des revendications 13 et 14, dans laquelle le changement de phase est endothermique avec une température croissante et exothermique avec une température décroissante.

16. Utilisation d'un revêtement de mur selon l'une quelconque des revendications 13 à 15, dans laquelle lesdites particules ont des diamètres de 10 à 120 µm.

17. Utilisation d'un revêtement de mur selon l'une quelconque des revendications 13 à 15, dans laquelle lesdites particules ont deux jeux de taille ou plus, où chaque taille diffère d'au moins un ordre de grandeur.

18. Utilisation d'un revêtement de mur selon la revendication 17, dans laquelle lesdites particules ont des tailles d'approximativement 10 µm et approximativement 100 µm,

19. Utilisation d'un revêtement de mur selon l'une quelconque des revendications 13 à 18, dans laquelle chacune desdites particules est encapsulée avec un revêtement imperméable, ledit revêtement étant facultativement flexible.

20. Utilisation d'un revêtement de mur selon l'une quelconque des revendications 13 à 19, dans laquelle lesdites particules sont noyées dans une couche du revêtement de mur et/ou collées à une couche absorbante (6) du revêtement de mur.

21. Utilisation d'un revêtement de mur selon l'une quelconque des revendications 13 à 20, dans laquelle le revêtement de mur comprend de 30 à 60 % en volume dudit au moins un matériau à changement de phase.

22. Utilisation d'un revêtement de mur selon l'une quelconque des revendications 13 à 21, dans laquelle ledit au moins un matériau à changement de phase est hydraté en dessous de la température à laquelle il affiche le changement de phase.

23. Utilisation d'un revêtement de mur selon l'une quelconque des revendications 13 à 22, dans laquelle ledit au moins un matériau à changement de phase est un mélange d'au moins deux tels matériaux, les températures auxquelles chacun affiche un changement de phase différant d'au moins 1 °C.

24. Utilisation d'un revêtement de mur selon l'une quelconque des revendications 13 à 23, dans laquelle le revêtement de mur peut se présenter sous la forme d'un rouleau et être déroulé pour l'appliquer à un mur.
